Europäisches Patentamt

European Patent Office

Office européen des brevets

(11) Numéro de publication: **0 406 206 A2**

## DEMANDE DE BREVET EUROPEEN

(21) Numéro de dépôt: **90870088.3**

(22) Date de dépôt: **08.06.90**

(51) Int. Cl.5: **C08J 9/12, C08J 9/14,**
**//(C08J9/12,C08L25:00)**

(30) Priorité: **09.06.89 BE 8900631**

(43) Date de publication de la demande:
**02.01.91 Bulletin 91/01**

(84) Etats contractants désignés:
**BE DE ES FR GB IT NL**

(71) Demandeur: **FINA RESEARCH S.A.**
**Zone Industrielle C**
**B-6520 Feluy(BE)**

(72) Inventeur: **Siraux, Daniel**
**rue du Glatimont 133**
**B-7401 Soignies(BE)**
Inventeur: **Huybrechts, Philippe**
**rue Dekens 16**
**B-1040 Bruxelles(BE)**
Inventeur: **Haveaux, Bernard**
**rue de Bruxelles 51**
**B-1400 Nivelles(BE)**

(74) Mandataire: **Leyder, Francis**
**c/o Fina Research S.A. Dépt. Brevets Zone**
**Industrielle C**
**B-6520 Feluy(BE)**

(54) **Mousses thermoplastiques de styrène et leur préparation.**

(57) On décrit une mousse résineuse synthétique thermoplastique alcényle aromatique qui contient un mélange d'agents porogènes comprenant le dichlorométhane et un agent porogène choisi parmi les HCFC, les HFC, les FC, le $CO_2$ et leurs mélanges.

EP 0 406 206 A2

## MOUSSES THERMOPLASTIQUES DE STYRENE ET LEUR PREPARATION.

La présente invention se rapporte à une mousse thermoplastique de polymère vinylaromatique, et en particulier de polymère de styrène. La présente invention se rapporte également à un procédé pour préparer le corps de mousse de polymère vinylaromatique par extrusion.

Une des applications principales des mousses de polymères de styrène se situe dans le domaine de l'isolation thermique. Nonobstant son pouvoir isolant, une mousse en polymère de styrène destinée à l'isolation thermique doit avantageusement posséder des cellules relativement petites, une excellente stabilité dimensionnelle et une bonne résistance à l'écrasement. Il est également souhaitable que le pouvoir isolant de la mousse soit conservé pendant une période aussi longue que possible. Du point de vue opératoire, on a constaté que certains composés contenant des halogènes, tels que le dichloro-difluoro-méthane, étaient avantageux pour préparer des mousses extrudées de polymères de styrène. A l'heure actuelle, il s'avère que de tels composés, lorsqu'ils sont libérés dans l'atmosphère, contribuent à la réduction de l'efficacité de la couche d'ozone stratosphérique servant d'écran solaire en s'y dissociant sous l'action des rayons ultra-violets. Par conséquent, il est souhaitable, d'une manière générale, d'éliminer l'emploi de composés bromés et/ou chlorofluorés, dans des applications où ils sont finalement libérés dans l'atmosphère.

On a déjà proposé des mousses de polymères vinylaromatiques qui contiennent soit un seul agent porogène à faible perméabilité, soit un mélange de deux agents porogènes dont l'un à faible perméabilité et l'autre à perméabilité élevée, et ne comportant pas de liaison carbone-hydrogène. Cependant, le pouvoir isolant des mousses avec ces types d'agents porogènes se dégrade lors de la perte de l'agent fortement perméable et de sa substitution par l'air.

La présente invention a donc plus particulièrement pour objet un corps allongé de mousse résineuse synthétique thermoplastique alcényle aromatique comportant une direction parallèle et une direction transversale par rapport à la direction machine, (1) le corps étant formé d'un polymère d'au moins 70% en poids d'un monomère de formule

$$Ar- \quad =CH_2$$

dans laquelle Ar représente un radical hydrocarboné aromatique ou un radical halohydrocarboné aromatique de la série du benzène et R est de l'hydrogène ou un radical méthyle, le reste du polymère étant constitué d'un autre monomère éthyléniquement insaturé copolymérisable avec lui, (2) le corps définissant une multiplicité de pores fermés contenant du gaz, sans interconnexion, (3) les pores possédant une taille moyenne de 0,1 à 1,2 mm et, de préférence de 0,1 à 0,9 mm, (4) le corps de mousse présentant une structure cellulaire généralement uniforme et ne comportant pas de discontinuités; (5) le corps étant dépourvu de variations substantielles de la taille moyenne des cellules, lorsque la dimension principale est mesurée en faisant la moyenne des diamètres des cellules le long de la section transversale minimale du corps (c'est-à-dire tel que mesuré selon le procédé ASTM D2832-69); (6) le corps allongé possédant une surface transversale d'au moins 50 cm$^2$ et possédant une dimension transversale minimale de 5mm; (7) le corps de mousse possédant une perméabilité à la vapeur d'eau inférieure à 2ng Pa$^{-1}$ s$^{-1}$ m$^{-1}$, telle que mesurée selon le procédé ASTM E96-80; (8) le corps possédant un poids spécifique compris entre 10 et 100 g/l, caractérisé en ce que les cellules contiennent comme agents porogènes un mélange constitué par (i) le dichlorométhane et (ii) un agent porogène choisi parmi les hydrochlorofluorocarbonés, les hydrofluorocarbonés, les fluorocarbonés et leurs mélanges, la proportion de dichlorométhane représentant au moins 5% et au maximum 25% en poids de la quantité totale d'agents porogènes.

L'invention a aussi pour objet un procédé pour l'extrusion de corps allongés en mous se résineuse synthétique thermoplastique alcényle aromatique ayant un poids spécifique de 10 à 100 g/l et une dimension des pores d'environ 0,1 à 1,2 mm, caractérisé par la plastification à chaud d'une matière résineuse synthétique thermoplastique alcényle aromatique, par l'injection d'un mélange d'agents porogènes liquides volatils, par un mélange uniforme de l'ensemble par le passage de la résine contenant l'agent porogène d'une filière d'extrusion dans une région de pression moins élevée où la résine extrudée gonfle pour engendrer un corps de structure cellulaire. En général, la matière résineuse obtenue par le procédé n'a pas perdu énormément d'agents porogènes et le plus souvent la perte n'excède pas 7.10$^{-4}$ mole d'agent porogène liquide volatil par g de polymère.

Par l'expression "résine synthétique thermoplastique alcényle (ou vinyl) aromatique" la demanderesse entend définir un polymère solide d'un ou plusieurs composés alcényles aromatiques polymérisables. Le polymère ou le copolymère comprend à l'état chimiquement lié, au moins 70% en poids d'au moins un hydrocarbure alcényle aromatique répondant à la formule générale suivante

2

Ar- $= CH_2$

dans laquelle Ar représente un radical hydrocarboné aromatique ou un radical halohydrocarboné aromatique de la série du benzène et R est de l'hydrogène ou un radical méthyle.

Comme exemples de telles résines alcényles aromatiques, on peut citer les homopolymères solides du styrène, de l'alpha-méthylstyrène, de l'o-méthylstyrène, du m-méthylstryrène, du p-méthylstyrène, de l'ar-éthylstyrène, l'ar-vinylxylène, de l'ar-chlorostyrène ou de l'ar-bromostyrène; les copolymères solides de deux ou plusieurs composés alcényles aromatiques de ce type avec des quantités mineures d'autres composés oléfiniques aisément polymérisables, comme le méthacrylate de méthyle, l'acrylonitrile, l'anhydride maléique, l'anhydride citraconique, l'anhydride itaconique et l'acide acrylique et les polymères du styrène renforcés par du caoutchouc (naturel ou synthétique).

Selon la présente invention, la quantité totale d'agents porogènes est comprise entre 8 et 20% en poids par rapport au poids de polymère alcényle aromatique.

Selon la présente invention on utilise un mélange d'agents porogènes liquides volatils constitué de 75 à 95% d'un composé choisi parmi les hydrochlorofluorocarbonés (HCFC) (F22, F123, F124, F141b, F142, F142b), les hydrofluorocarbonés (HFC) (F125, F134, F134a, F143a, F152a, F161, F263, F272), les fluorocarbonés (FC) (F116, F218), le $CO_2$ et leurs mélanges, et de 5 à 25% de chlorvre de méthylène. La Demanderesse a maintenant trouvé d'une manière inattendue que l'on obtenait une mousse ayant des propriétés physiques nettement améliorées, du point de vue notamment de la stabilité dimensionnelle et de la masse volumique si l'on utilise le chlorure de méthylène qui est un agent porogène ayant un caractère plastifiant.

Le caractère plastifiant se caractérise par l'énergie spécifique plus faible, ce qui se traduit par une consommation moindre d'énergie pour un même débit de matière.

La Demanderesse a également trouvé que la quantité de dichlorométhane ne doit pas dépasser 25% en poids du mélange des agents porogènes afin de conserver tous les avantages du procédé de l'invention. Si l'on utilise des quantités supérieures à 25%, une sur-lubrification se déroule dans l'extrudeuse et les propriétés physico mécaniques et dimensionnelles en sont détériorées. De plus, et cela constitue un avantage significatif, le chlorure de méthylène est peu toxique et difficilement inflammable.

La préparation de mousses de polymères résineux alcényles aromatiques conformes à la présente invention s'effectue le plus commodément d'une manière connue selon laquelle l'agent gonflant fluide volatil est injecté dans un courant de polymère plastifié à chaud dans une extrudeuse.

On fait passer le gel plastifié à chaud de l'extrudeuse dans un mélangeur, le mélangeur étant un mélangeur rotatif dans lequel un rotor garni de pointes est enfermé dans un carter qui possède une surface interne également garnie de pointes qui coopèrent avec les pointes du rotor. Le gel plastifié à chaud provenant de l'extrudeuse est introduit dans l'entrée du mélangeur et est prélevé par la sortie du mélangeur, l'écoulement s'effectuant dans une direction généralement axiale. Du mélangeur, le gel passe à travers .des refroidisseurs et des refroidisseurs dans une filière qui en extrude une plaque de forme généralement rectangulaire.

Lors de la préparation de mousses conformes à la présente invention, il est souvent souhaitable d'ajouter un agent de nucléation, tel que, par exemple, le talc, les silicates, afin de réduire la taille des cellules. On peut également incorporer à la mousse, qu'elle contienne ou non un agent de nucléation, un agent ignifuge choisi parmi du monochloropentabromocyclohexane de pureté commerciale, et de l'hexabromocyclododécane, leurs mélanges ou autres analogues. Le mélange constitué par le polymère, et les différents additifs est introduit dans une extrudeuse, il est chauffé, homogénéisé; ensuite on injecte de manière continue le mélange d'agents porogènes dans le fourreau de cette extrudeuse. Le mélange résultant d'agents porogènes et de polymères alcényles aromatiques contenant les autres additifs éventuels est expansé sous la forme d'une plaque rectangulaire dont l'épaisseur est comprise entre 10 et 150 mm et la largeur comprise entre 600 et 1500 mm.

Les températures d'expansion varient de 100 à 120 °C. Le débit d'extrusion, la composition des mélanges d'agents porogènes et les propriétés physiques résultantes figurent dans le tableau qui suit. Le poids spécifique est indiqué en kg/m³, la taille des cellules en millimètres (mm) et sous la rubrique mélange d'agents porogènes, on donne les constituants et leur pourcentage en poids, par rapport à la composition polymérique totale.

Les mousses préparées et indiquées dans les tableaux contiennent un agent ignifuge à raison de 1,5 à 5 parties pour 100 de polymère alcényle aromatique et éventuellement un agent nucléant à raison de 0,1 à 5 parties pour 100 de polymère alcényle aromatique.

On a également remarqué qu'avec le procédé de l'invention on parvenait à diminuer la masse volumique de la mousse et à diminuer également l'énergie spécifique de 5 à 10%. Les valeurs de ces paramètres sont indiquées également dans chacun des exemples suivants qui sont donnés à titre d'illustration de la présente invention et sans en constituer une limitation.

Le tableau annexé comprend différents exemples d'extrusion avec un mélange d'agents porogènes comprenant un premier agent ou mélange d'agents comme les HCFC 22 et 142 b ou leurs mélanges et comme second agent le dichlorométhane. La teneur en chaque agent porogène injecté est exprimée en pourcentage en poids par rapport au poids total de la matière polymérique. On donne également les valeurs de l'énergie spécifique, de la masse volumique et de la stabilité dimensionelle qui montre l'excellente extrudabilité du polystyrène lorsque l'on travaille avec le chlorure de méthylène, selon la présente invention.

Les tailles de cellules dans les trois directions d'expansion sont conservées.

On donne également les teneurs en agents porogènes résiduelles lors de l'extrusion et après un temps supérieur à 3 mois.

Exemples 1 à 3 et exemples comparatifs A et B

On a extrudé du polystyrène avec des agents porogènes selon le procédé de l'invention en utilisant une résine de polystyrène, ayant un indice de fluidité de 3 g/10′ (200°C/5 kg; norme ASTM D 1238) dans laquelle on a incorporé 3% d'hexabromocyclododécane et 0,75% de talc comme agent de nucléation.

On a introduit les agents porogènes dans la résine polystyrène à l'état fondu à raison d'environ 11 à 15% en poids basé sur le poids de la résine; les proportions sont données au Tableau 1.

On a réglé la température d'expansion entre 105 et 120°C, la pression à la filière étant comprise entre 25 et 59 kg/cm².

On a réglé l'épaisseur finale du panneau au moyen de l'ouverture de la filière et de la vitesse d'étirage pour obtenir une épaisseur soit de 40, soit de 60 mm et une largeur du panneau de 700 ou 800 mm selon le cas.

A titre de comparaison, on a pris un mélange d'agents porogènes pour lesquels on sait qu'ils ont une influence néfaste sur la couche d'ozone, et on a déterminé les propriétés obtenues.

On peut constater que les mélanges de l'invention ont des propriétés similaires à celles utilisées auparavant, excepté que l'énergie spécifique diminue, ce qui constitue un grand avantage. De plus, on obtient une réduction drastique du pouvoir de déterioration de la couche d'ozone.

4

Tableau 1

| Ex. | Agents Porogènes | | ODP | Pds Sp. | Cellule | Resist Comp. | Age | Lambda | Stab. dim. | | | Energie Sp. |
|---|---|---|---|---|---|---|---|---|---|---|---|---|
| | | | | | | | | | Ep | I | II | |
| | | | | kg/m³ | mm | N/cm² | j | mW/m.°C | % | % | % | W.h/kg |
| 1 | F 22 CH₂Cl₂ | 11,3% 1,4% | 0,05 <0,02 | 34,0 | 0,28 | 42 | 66 | 29,5 | -0,4 | -0,7 | 1,9 | 170 |
| 2 | F 142 b CH₂Cl₂ | 10,4% 1,6% | <0,07 <0,02 | 33.8 | 0,42 | 18 | 54 | 24,8 | 1,3 | -0,1 | -0,5 | 172 |
| 3 | F 142 b F 22 CH₂Cl₂ | 6,1% 4,0% 1,0% | <0,07 0,05 <0,02 | 30,0 | 0,37 | 25 | 60 | 28 | 0,3 | -0,1 | 0,0 | 175 |
| A | F 12 | 15,3% | 1,00 | 36,0 | 0,20 | 33 | 150 | 25 | 1,2 | 0 | 1,2 | 172 |
| B | F 22 F 142 b | 8,4% 4,1% | 0,05 <0,07 | 33.0 | 0,29 | 28 | 120 | 31 | 1,3 | 0,5 | 0,5 | 185 |
| Légende | | | | | | | | | | | | |

ODP = potentiel de déplétion de l'ozone

Pds Sp. = poids spécifique

Cellule = taille moyenne des cellules

Resist. comp. = résistance à la compression

Lambda = coefficient de diffusion thermique

Stab. dim. = stabilité dimensionnelle (Ep = épaisseur, I = perpendiculaire à l'extrusion, II = parallèlement à l'extrusion)

Energie sp. = énergie spécifique mesurée lors de l'extrusion.

**Revendications**

1. Corps de mousse résineuse synthétique thermoplastique alcényle aromatique comportant une direction parallèle et une direction transversale par rapport à la direction machine, (1) le corps étant formé d'un polymère d'au moins 70% en poids d'un monomère de formule

Ar-   $= CH_2$

dans laquelle Ar représente un radical hydrocarboné aromatique ou un radical halohydrocarboné aromatique de la série du benzène et R est de l'hydrogène ou un radical méthyle, le reste du polymère étant constitué d'un autre monomère éthyléniquement insaturé copolymérisable avec lui, (2) le corps définissant une multiplicité de pores fermés contenant du gaz, sans interconnexion, (3) les pores possédant une taille moyenne de 0,1 à 1,2 mm et, de préférence de 0,1 à 0,9 mm, (4) le corps de mousse présentant une structure cellulaire généralement uniforme et ne comportant pas de discontinuités; (5) le corps étant dépourvu de variations substantielles de la taille moyenne des cellules, lorsque la dimension principale est mesurée en faisant la moyenne des diamètres des cellules le long de la section transversale minimale du corps (c'est-à-dire tel que mesuré selon le procédé ASTM D2832-69); (6) le corps allongé possédant une surface transversale d'au moins 50 cm² et possédant une dimension transversale minimale de 5mm; (7) le corps de mousse possédant une perméabilité à la vapeur d'eau inférieure à 2ng $Pa^{-1}$ $s^{-1}$ $m^{-1}$, telle que mesurée selon le procédé ASTM E96-80; (8) le corps possédant un poids spécifique compris entre 10 et 100 g/l, caractérisé en ce que les cellules contiennent comme agents porogènes un mélange constitué par (i) le dichlorométhane et (ii) un second agent porogène choisi parmi les hydrochlorofluorocarbonés, les hydrofluorocarbonés, les fluorocarbonés, le $CO_2$ et leurs mélanges, la proportion de dichlorométhane représentant au moins 5% et au maximum 25% en poids de la quantité totale d'agents porogènes.

2. Corps de mousse selon la revendication 1, caractérisé en ce que la résine thermoplastique alcényle aromatique comprend au moins 70% d'un hydrocarbure alcényle aromatique de formule générale

Ar- $= CH_2$

dans laquelle Ar représente un radical hydrocarboné aromatique ou un radical halohydrocarboné aromatique de la série du benzène et R est de l'hydrogène ou un radical méthyle.

3. Corps de mousse selon la revendication 2, caractérisé en ce que l'hydrocarbure alcényle aromatique est choisi parmi les homopolymères solides du styrène, de l'alpha-méthylstyrène de l'o-méthylstyrène, du m-méthylstryrène, du p-méthylstyrène de l'ar-éthylstyrène, l'ar-vinylxylène, de l'ar-chlorostyrène ou de l'ar-bromostyrène.

4. Corps de mousse selon l'une quelconque des revendications 1 à 3 caractérisé en ce que le second agent porogène est choisi parmi les composés hydrochlorofluocarbonés (HCFC), les composés hydrofluorocarbonés (HFC), les composés fluorocarbonés (FC) et le $CO_2$, et leurs mélanges.

5. Corps de mousse selon la revendication 4, caractérisé en ce que les composés HCFC sont choisis parmi les composés F22, F123, F124, F141b, F142 et F142b.

6. Corps de mousse selon la revendication 5, caractérisé en ce que les composés HFC sont choisis parmi les composés F125, F134, F134a, F143a, F152a, F161, F263 et F272.

7. Corps de mousse selon la revendication 5, caractérisé en ce que les composés FC sont choisis parmi les composés F116 et F218.

8. Corps de mousse selon l'une quelconque des revendications 1 à 7, caractérisé en ce qu'il contient des agents porogènes à raison de 8 à 20% en poids par rapport au poids de polymère alcényle aromatique.

9. Corps de mousse selon l'une quelconque des revendications 1 à 7 caractérisé en ce que l'on ajoute un agent ignifuge à raison de 1,5 à 5 parties pour 100 parties de polymère alcényle aromatique et éventuellement un agent nucléant à raison de 0,1 à 5 parties pour 100 parties de polymère alcényle aromatique.

10. Procédé pour fabriquer le corps de mousse suivant l'une quelconque des revendications 1 à 9, caractérisé par la plastification à chaud d'une matière résineuse synthétique thermoplastique alcényle aromatique, par l'injection d'un mélange d'agents porogènes comprenant le dichlorométhane et un agent porogène choisi parmi les HCFC, les HFC et les FC, le $CO_2$ et leurs mélanges par le passage de la résine contenant les agents porogènes d'une filière d'extrusion dans une région de pression moins élevée où la résine extrudée gonfle pour engendrer un corps de structure cellulaire.